# EUROPEAN PATENT APPLICATION

(11) **EP 4 411 620 A1**
(43) Date of publication of application: **07.08.2024**
(21) Application number: 23154991.6
(22) Date of filing: 03.02.2023
(51) Int. Cl.: G06Q 30/0201

(54) **SYSTEMS AND TECHNIQUES FOR USER RESPONSE ANALYSIS**

(71) Applicant: Nagravision Sarl, 1033 Cheseaux-sur-Lausanne (CH)
(72) Inventor: BERKES, Pietro, 1033 Chesseau-sur-Lausanne (CH); FIVAZ, Matthieu, 1033 Chesseau-sur-Lausanne (CH); SUTER, Samuel, 1033 Chesseau-sur-Lausanne (CH); DAOLIO, Fabio, 1033 Chesseau-sur-Lausanne (CH)
(74) Representative: Mewburn Ellis LLP

(57) **Abstract**

The present disclosure generally relates to user response analysis. For example, aspects of the present disclosure include systems and techniques for identifying a response of a user to a particular action. One example method includes obtaining, via a user prediction system, one or more actions associated with a subscription service; obtaining, via the user prediction system, user characteristics associated with each user of one or more users of the subscription service; determining, via the user prediction system, a probability of a reaction of the one or more users in response to each of the one or more actions based on the user characteristics; and providing a user response prediction output based on the probability of the reaction.

## Description

### FIELD

The present disclosure generally relates to user response analysis. For example, aspects of the present disclosure include systems and techniques for identifying a response of a user to a particular action.

### BACKGROUND

A subscription service provides customer the opportunity to pay a single fee, providing the customer access to the provider's service for a designated period of time. For example, a fee may be paid on a monthly service to stream various shows and videos. Some service providers have many users. Therefore, an increase in the price of the subscription can have a big impact on the provider's revenue. The provider may also have access to data on each user, such as the user's location and consumption habits.

### SUMMARY

Certain aspects provide a method for user response prediction. The method generally includes obtaining, via a user prediction system, one or more actions associated with a subscription service, obtaining, via the user prediction system, user characteristics associated with each user of one or more users of the subscription service, determining, via the user prediction system, a probability of a reaction of the one or more users in response to each of the one or more actions based on the user characteristics, and providing a user response prediction output based on the probability of the reaction.

Certain aspects provide an apparatus for user response prediction. The apparatus generally includes a memory and one or more processors coupled to the memory, the one or more processors being configured to obtain, via a user prediction system, one or more actions associated with a subscription service, obtain, via the user prediction system, user characteristics associated with each user of one or more users of the subscription service, determine, via the user prediction system, a probability of a reaction of the one or more users in response to each of the one or more actions based on the user characteristics, and provide a user response prediction output based on the probability of the reaction.

Certain aspects provide a non-transitory computer-readable medium having instructions stored thereon, which when executed by one or more processors, cause the one or more processors to obtain, via a user prediction system, one or more actions associated with a subscription service, obtain, via the user prediction system, user characteristics associated with each user of one or more users of the subscription service, determine, via the user prediction system, a probability of a reaction of the one or more users in response to each of the one or more actions based on the user characteristics, and provide a user response prediction output based on the probability of the reaction.

### BRIEF DESCRIPTION OF THE DRAWINGS

Illustrative embodiments of the present application are described in detail below with reference to the following drawing figures:
FIG. 1 is a diagram illustrating an example user prediction system implemented using a computing device, in accordance with some examples.
FIG. 2 illustrates a user prediction system that predicts customer behavior in response to a particular action, in accordance with certain aspects of the present disclosure.
FIG. 3A illustrates revenue of a subscription service across time, in accordance with certain aspects of the present disclosure.
FIG. 3B illustrates a revenue distribution associated with a period after a price increase, in accordance with certain aspects of the present disclosure.
FIG. 4 illustrates a machine learning model to generate probabilities of outcomes, in accordance with certain aspects of the present disclosure.
FIG. 5 illustrates a user prediction system implemented as a digital twin of a user, in accordance with certain aspects of the present disclosure.
FIG. 6 illustrates a graph of predicted responses to actions implemented for various user, in accordance with certain aspects of the present disclosure.
FIG. 7 illustrates example techniques for training a decision tree for implementing a user prediction system, in accordance with certain aspects of the present disclosure.
FIG. 8 illustrates multiple decision trees trained to implement a user prediction system, in accordance with certain aspects of the present disclosure.
FIG. 9 illustrates decision trees used to determine a user's reaction to a price increase, in accordance with certain aspects of the present disclosure.
FIG. 10 illustrates the user prediction system implemented using machine learning, in accordance with certain aspects of the present disclosure.
FIGs. 11A and 11B illustrate a graphical user interface used to balance churn and revenue, in accordance with certain aspects of the present disclosure.
FIG. 12 illustrates example operations for user response prediction, in accordance with certain aspects of the present disclosure.
FIG. 13 illustrates an architecture of a computing system.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides example embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the application as set forth in the appended claims.

A subscription model is often used to provide specific services to users (also referred to herein as customers or subscribers). For example, customers may pay a specific price per month for a variety of services provided by a company (also referred to herein as a provider). Different customers may react differently to actions or changes made to the subscription service. However, conventional data analysis systems are unable to sufficiently analyze customer data to provide a prediction of customer responses (e.g., reactions) to changes in subscription services. Certain aspects of the present disclosure provide systems and techniques for customer data analysis to assess customer response to a particular action for a subscription service. For example, certain aspects provide a user prediction system that analyzes customer data (e.g., user characteristics) and provides probabilities of specific user responses or reactions to a particular action such as a subscription price increase.

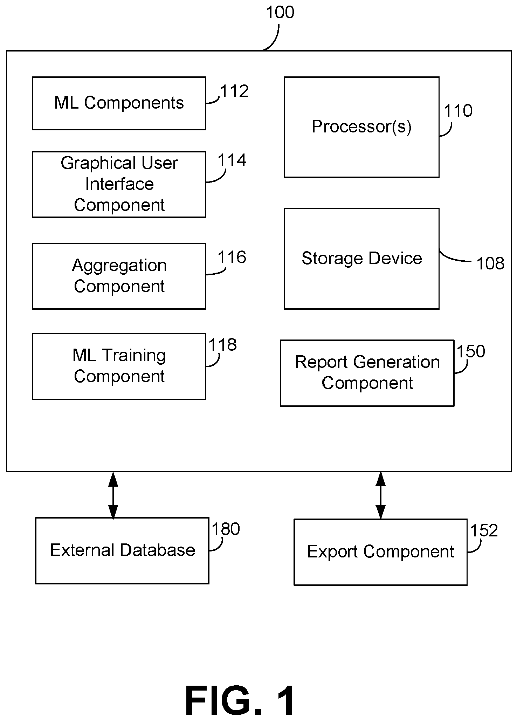

FIG. 1 is a diagram illustrating an example user prediction system 100 implemented using a computing device, in accordance with some examples. In the example shown, the user prediction system 100 may include storage 108 and at least one processor 110 (e.g., a compute cluster). In some aspects, the components of the user prediction system 100 may be part of separate computing devices that may communicate across a network. The storage 108 (e.g., a storage cluster) can include any storage device(s) for storing data. The storage 108 can store data from any of the components of the user prediction system 100.

The storage 108 may be a dynamic random access memory (DRAM) or other type of storage. In one illustrative example, a row hammer attack may be used to change bit states in the DRAM, as described in more detail herein. While examples are described herein using DRAM as an illustrative example of storage or memory, the techniques described herein may apply to other types of storage or memory, such as other types of RAM such as synchronous dynamic random access memory (SDRAM) and/or non-volatile random access memory (NVRAM), read-only memory (ROM), electrically erasable programmable read-only memory (EEPROM), cache memory, FLASH memory, magnetic or optical data storage media, or other type of storage or memory.

In some implementations, the processor 110 can include a central processing unit (CPU), a graphics processing unit (GPU), a digital signal processor (DSP), any combination thereof, or other type of processor. As shown, user prediction system 100 may include a machine learning component(s) 112 that may be used to predict user reactions to various actions such as a price increase of a subscription service. The user prediction system 100 may also include a training component 118 that may be used to train the machine learning component 112. In some aspects, the user prediction system 100 any include a graphical user interface component 114, which may generate a graphical user interface for receiving parameters (e.g., tradeoff between revenue and saved users) and presenting user prediction outputs to a provider. The user prediction system 100 may also include an aggregation component 116 that may aggregate impacts of responses to actions across multiple users to provide a total impact (e.g., impact on revenue or churn) of the actions to the provider. In some aspects, the user prediction system 100 may include a report generation component 150. The report generation component 150 may generate a report including user prediction information. The generated report may be sent using an export component 152 which may be communicably coupled to the user prediction system 100, as shown. In some aspects, the user prediction system 100 may be communicably coupled to an external database 180. The external database 180 may include contextual information about a user, as described in more detail herein. The contextual information may include, for example, geographical information, sanitary information, or economic information. As one example, the external database 180 may include information about a city in which the user resides and the associated internet limitations applying to the user, which may be important to consider when making predictions.

In some aspects, machine learning component(s) 112, graphical user interface generation component 114, aggregation component 116, and/or training component 118 may be implemented as part of the processor 110 and/or implemented as instructions in storage 108. The machine learning component(s) 112, graphical user interface generation component 114, aggregation component 116, and/or training component 118 may be implemented in hardware, software, or a combination of hardware and software. In some aspects, the machine learning component(s) 112, graphical user interface generation component 114, aggregation component 116, and/or training component 118 may be implemented by or in the same hardware, software, or combination of hardware and software (e.g., by the same processor). In some aspects, the machine learning component(s) 112, graphical user interface generation component 114, aggregation component 116, and/or training component 118 may be implemented by or in separate hardware, software, or combination of hardware and software.

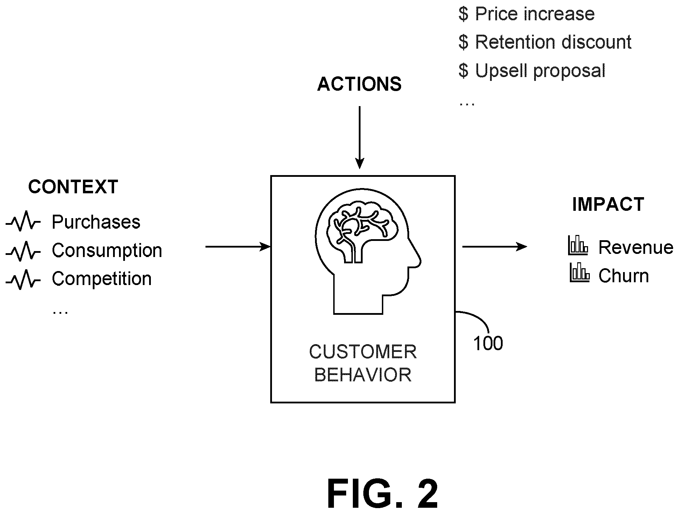

FIG. 2 illustrates the user prediction system 100 that predicts customer behavior in response to a particular action given context and user characteristics, in accordance with certain aspects of the present disclosure. The user characteristics may include various factors such as how much the user is paying for the subscription now, how much of the subscription the user is using (e.g., how much video the user watches each month), how much data the user has downloaded or uploaded in a period of time, how many calls have the user made to the call center in the past year, whether there has been a price change recently for the user, the location of the user, or whether there are other competitors available to the user. Various actions may be analyzed, such as an increase in the subscription price, providing a retention discount, or an upsell proposal. The customer behavior or reaction to such actions may be a function of context (e.g., user characteristics) such as previous purchases, consumption, or competition for the service being provided. As a result, the analysis of the customer behavior may provide an indication of the customer's response or reaction to the action, and in turn, impact on various parameters such as revenue or churn for the provider. The user prediction system 100 may either provide, as output, an indication of an optimal price increase or an optimal discount.

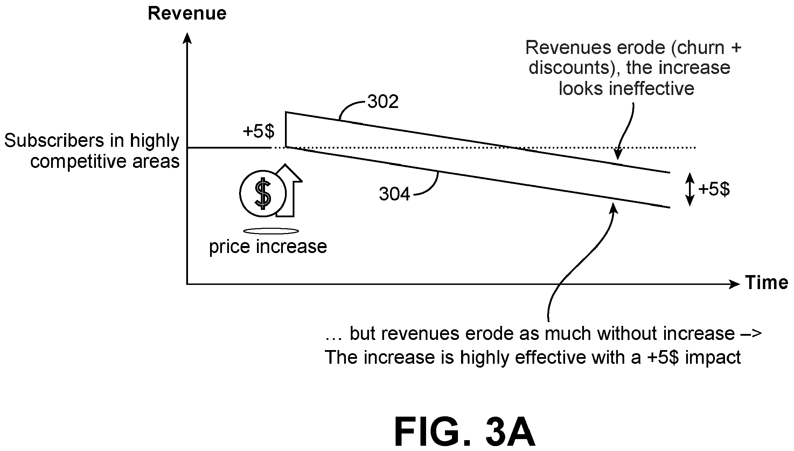

FIG. 3A illustrates an example revenue of a subscription service across time, in accordance with certain aspects of the present disclosure. A provider may implement a price increase of $5 may be implemented for a subscription service. After the $5 increase, revenue may begin to erode due to churn or various discounts having to be provided to reduce churn, as shown by line 302. Without proper data analysis, it may seem that the increase in subscription price was ineffective. However, in some scenarios, revenue would erode even if the $5 price increase was not implemented, as shown by line 304. Thus, in such a case, it would be prudent to implement the $5 price increase. Proper data analysis using machine learning may provide probabilities of user reactions to the price increase, allowing a provider to make a decision of whether to implement the price increase or how much of a price increase to implement for each user.

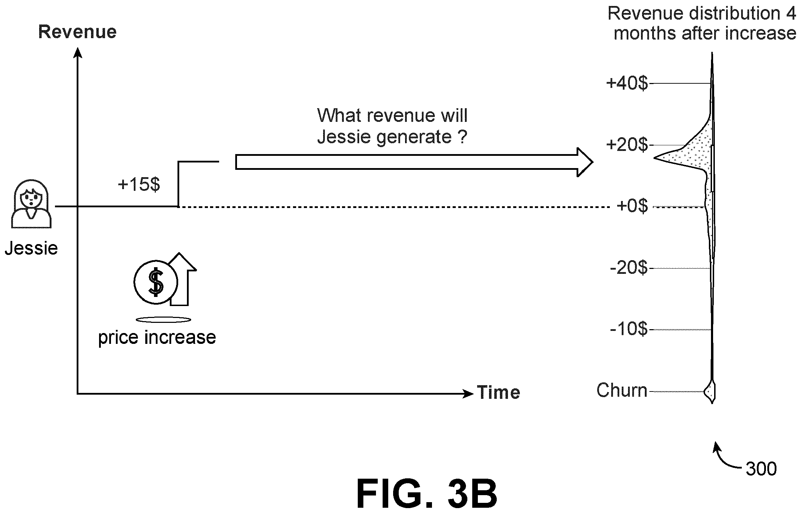

FIG. 3B illustrates a revenue distribution associated with a period (e.g., 4 months) after a price increase, in accordance with certain aspects of the present disclosure. For instance, once a price increase occurs for a particular user (e.g., Jessie), a user prediction system may provide a revenue distribution 300, indicating probabilities of associated revenue impacts. As shown, the price increase may have a high probability of increased revenue of around $15 and a smaller probability that the user may churn away. The revenue distribution may be calculated by aggregating the impact of price increases (e.g., the same or different price increases) across multiple users, as described in more detail herein.

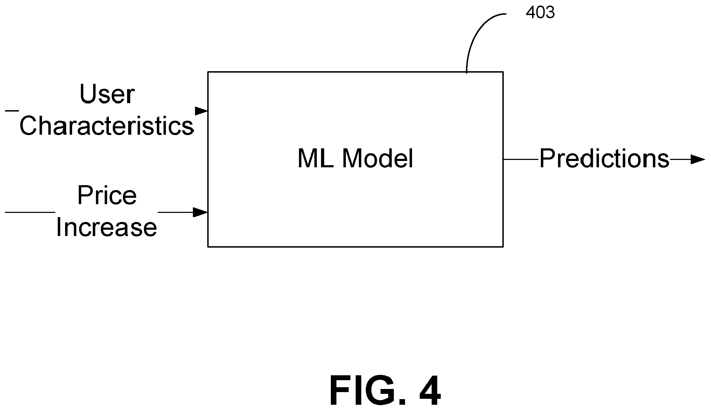

FIG. 4 illustrates a machine learning model for generating probabilities of specific outcomes, such as revenue or churn, in accordance with certain aspects of the present disclosure. In some aspects, an action of a price increase (e.g., of $15) for a user may be input to a user prediction system (e.g., machine learning model 403). In some aspects, the machine learning model 403 may also be provided with user characteristics, as described herein. The machine learning model may generate, based on the user characteristics and the price increase, and probability of a particular outcome, such a probability of a particular impact to revenue or churn.

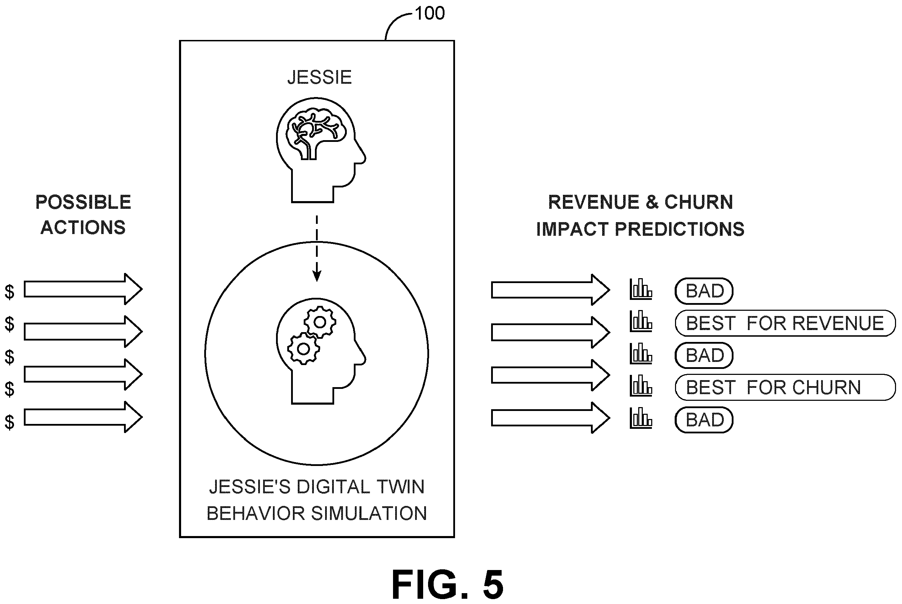

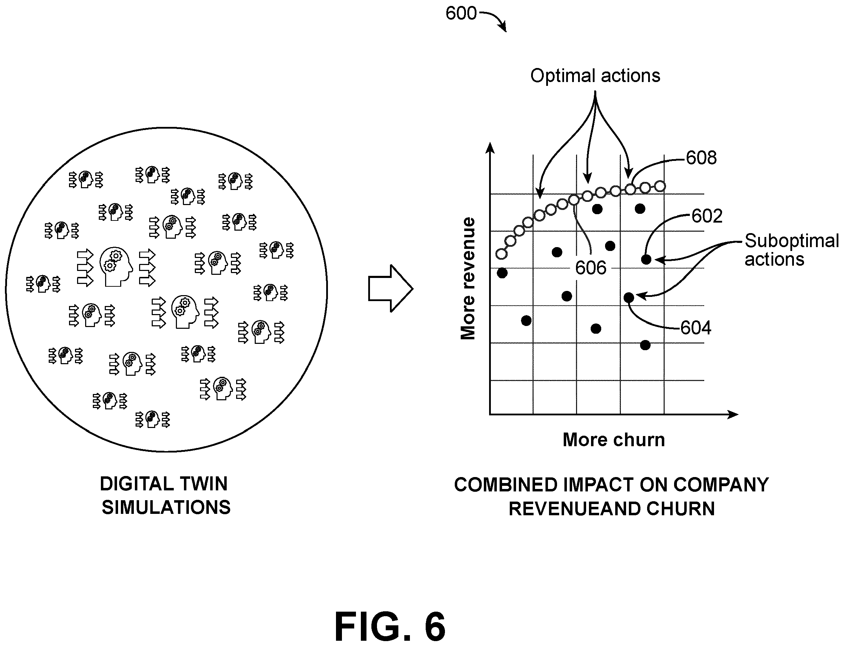

FIG. 5 illustrates a user prediction system 100 used to generate a digital twin of a user, in accordance with certain aspects of the present disclosure. For instance, the digital twin may replicate the behaviour of the user, allowing a provider to assess user reactions to various actions, including subscription price increases. In one example, the user prediction system may be implemented using machine learning to identify a reaction of a particular user (e.g., or particular user characteristics and/or the contextual information) to various actions. The user prediction system may output a response prediction for each possible action. As shown, some of the possible actions may provide a response that is predicted to be best for revenue, and some of the possible actions may provide a response that is predicted to be best for retention. On the other hand, some of the possible actions may be predicted to be suboptimal for both revenue and retention, as described in more detail with respect to FIG. 6.

FIG. 6 illustrates a graph 600 of predicted responses to actions implemented for various users, in accordance with certain aspects of the present disclosure. As shown, a digital twin of multiple users with different characteristics may be implemented. Some digital twins of users may carry more weight (e.g., be more important) than others based on various factors. For example, some digital twins may correspond to users that have a long history with the company, and thus, are more reliable. More weight may be placed on digital twins of users having more experience with the company and bringing more revenue, or in some aspects, the weight may be inversely proportional to the standard deviation of the corresponding response.

Actions to be taken may be input to each of the digital twins, based on which a combined impact to company revenue and churn may be predicted in response to each action using digital twin simulations. As shown, some actions, such as actions corresponding to points 602, 604, may result in predicted suboptimal churn or revenue outcome. Some actions, such as actions corresponding to points 606, 608, may be predicted to result in optimal revenue given a specific churn or optical churn given a specific revenue, as shown. Thus, the user prediction system determines an aggregate prediction for each combination of actions across the population of users, which represents an expected impact (e.g., with respect to revenue and churn) for each combination of actions on the users. The expected impact may take into account different weights of the digital twins during aggregation. Each point plotted on the graph 600 represents the revenue and churn impact resulting from one of these aggregated predictions. The aggregate prediction can be determined by aggregating the probabilities of users for a given combination of actions, and determining the expected impact (e.g., revenue and churn) based on the aggregated probabilities. The optimal action for each of the users may be presented to the subscription provider, allowing the provider to make a decision as to the actions to be taken such as a price increase to be implemented for each user. The optimal action may be associated with a confidence interval. As described herein, one or more machine learning components may be trained to implement the digital twin of the users.

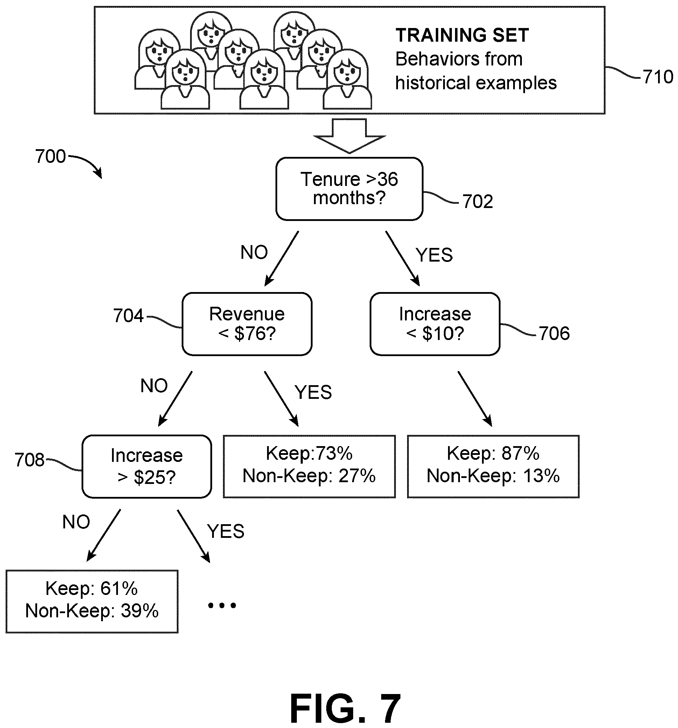

FIG. 7 illustrates example techniques for training a machine learning model using a decision tree 700 for implementing the user prediction system, in accordance with certain aspects of the present disclosure. As shown, a training set 710 including multiple users and associated behaviours (e.g., previous reactions to specific actions) may be provided to the decision tree 700. At each of nodes 702, 704, 706, 708, a particular criteria (e.g., characteristic) may be selected and considered. For example, at node 702, if a user has tenure greater than 36 months, and if at node 706, a price increase being analysed is less than $10, then the decision tree may provide a probability of 87% than the user will keep the price increase. The criteria at each node may be selected to maximize the information gain across the training set. That is, the decision tree is created such that each node splits past behaviours for the training set in a way that maximizes information about whether a user keeps the price increase.

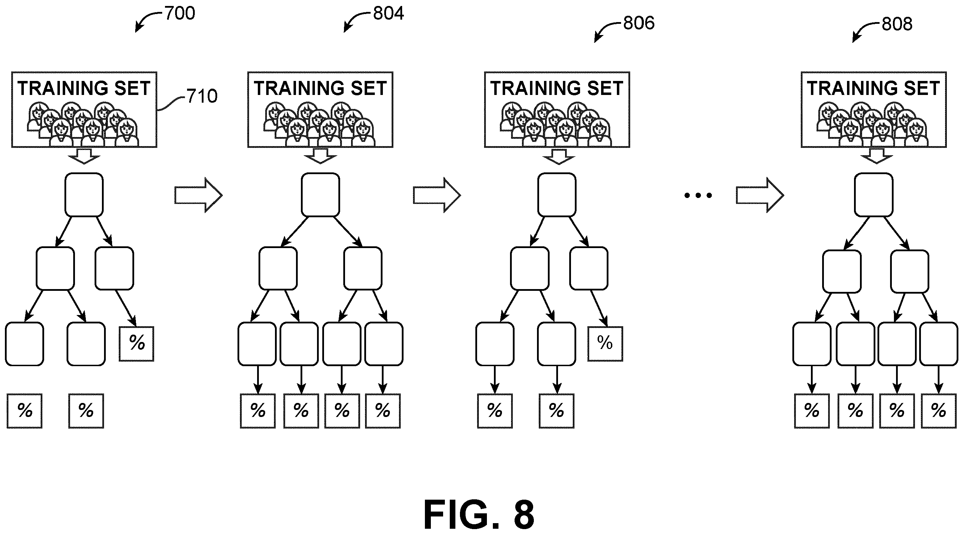

FIG. 8 illustrates multiple decision trees 700, 804, 806, 808 (e.g., a forest of decision trees or a boosting algorithm) trained to implement the user prediction system, in accordance with certain aspects of the present disclosure. Once decision tree 700 is trained, each subsequent decision tree 804, 806, 808 may be trained in turn with nodes that focus on the errors associated with the previous decision tree. As one example, decision tree 700 may be trained using the entire training set 710. Once the decision tree 700 is trained, a subset of the training set 710 may be selected that is determined to represent behaviours that are outliers with respect to the decision tree 700. The subset of the training set may be then provided and used to train the decision tree 804, and so on. The aspects of the present disclosure may be implemented using any number of decision trees (e.g., one or more decision trees). Once the decision trees have been trained, the decision trees may be used together to analyze user reactions to an action.

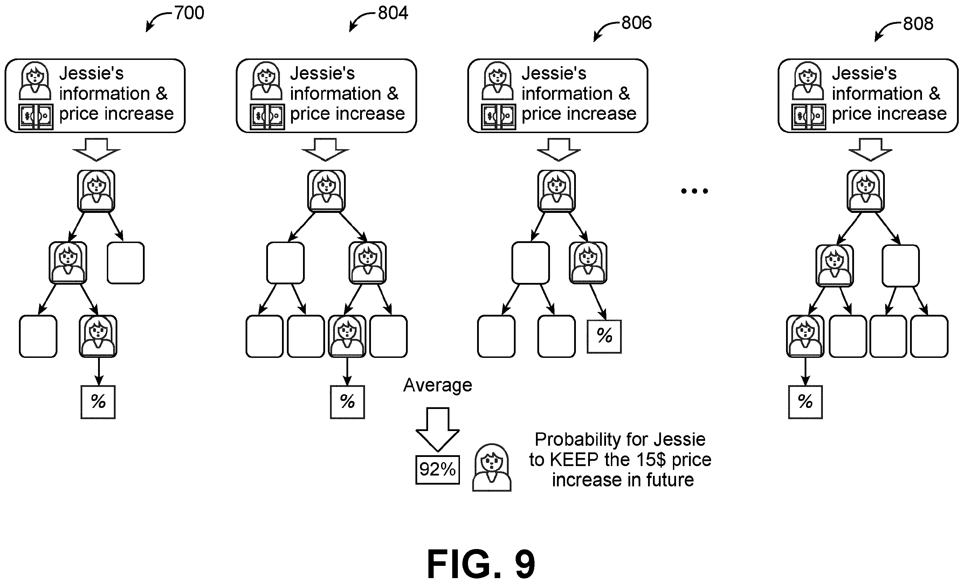

FIG. 9 illustrates decision trees 700, 804, 806, 808 used to determine a user's (e.g., Jessie's) reaction to a price increase, in accordance with certain aspects of the present disclosure. As shown, the user's information (e.g., user characteristics) and the associated action (e.g., price increase) may be provided to each of the decision trees. Each decision tree provides an output indicating a probability (e.g., the probability that the user keeps the price increase). The probabilities output by the decision trees may be averaged to provide a final probability (e.g., 92%) that the user keeps the price increase, as shown.

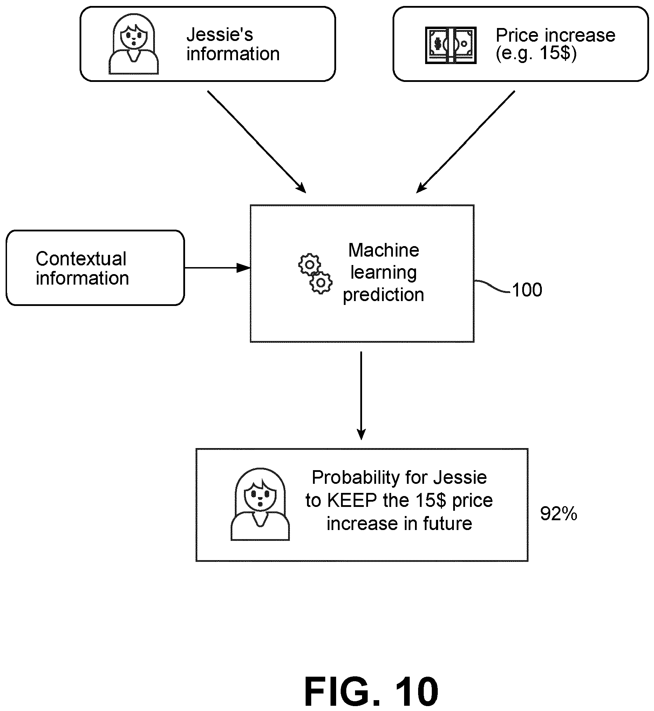

FIG. 10 illustrates the user prediction system 100 implemented using machine learning, in accordance with certain aspects of the present disclosure. As shown, user characteristics (e.g., Jessie's information) and a desired price increase may be provided to the user prediction system 100, based on which a probability that Jessie will keep the price increase is provided. In some cases, the contextual information may also be provided to the user prediction system 100. The contextual information may include competition, economical impact (e.g., inflation), unemployment rate, or weather, as a few examples.

The user prediction system 100 may be implemented using one or more decision trees, as described herein.

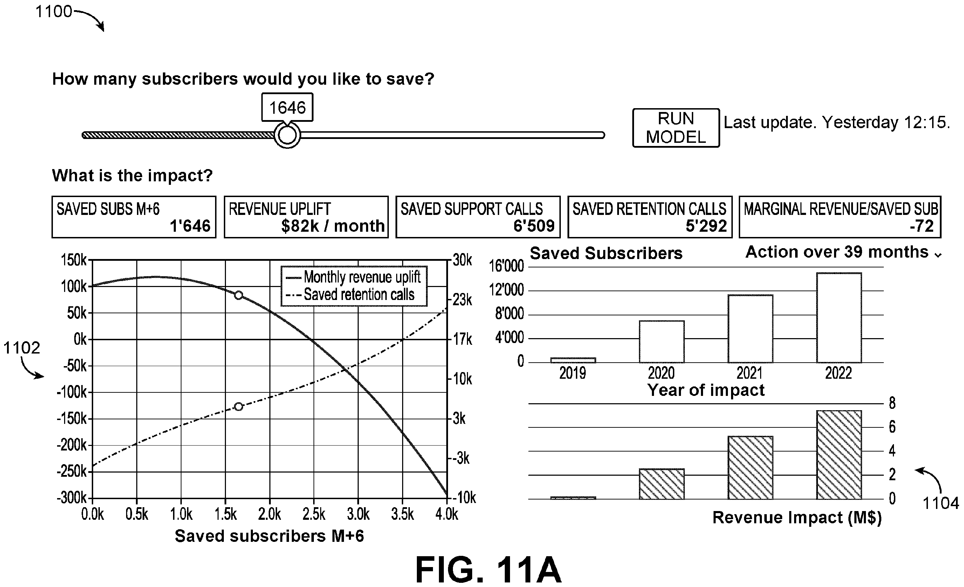

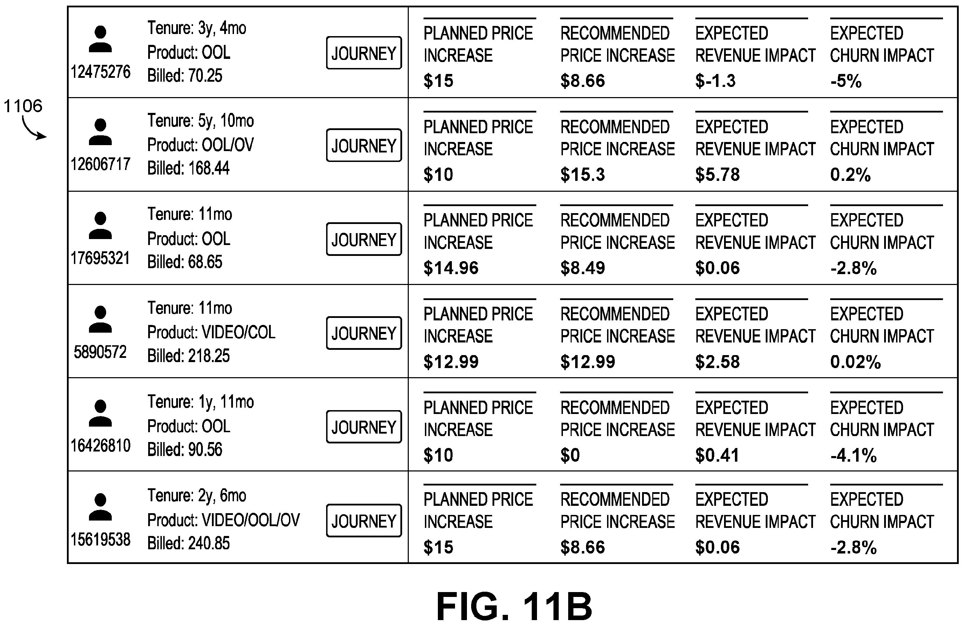

FIGs. 11A and 11B illustrate a graphical user interface 1100 used to balance churn and revenue, in accordance with certain aspects of the present disclosure. As described, a provider may indicate how many users the provider wants to save. As shown in graph 1102, there is a tradeoff between the number of users saved and monthly revenue uplift. The provider selects the tradeoff the provider wishes to make between the number of users saved and monthly revenue uplift. Based on the provider input, the user prediction system generates actions to be implemented. As shown in FIG. 11B, the user prediction system generates a recommended action 1106 to be applied for each of the users to meet the provider's preference with regards to how many users the administrator wants to save. The recommended action may correspond to one of the optimal actions (e.g., associated with point 606 or point 608 as described with respect to FIG. 6) that is selected based on the tradeoff indicated by the provider. The user prediction system also generates future predictions of user and revenue impact, as shown by graphs 1104.

In some aspects of the present disclosure, responses to actions are predicted at a user level with digital twins, as described herein. Once responses (and associated probabilities) are predicted, individual responses are aggregated to identify a global response surface (e.g., a global response function) to actions. With the global response function, a strategy to meet at least one particular performance metric (e.g., particular revenue goal) may be identified. Using the global response function, individual actions of users to meet the performance metric may be identified and indicated. In other words, the globally selected optimal response may be used to identify individual actions of users and displayed (e.g., via a graphical user interface).

The digital twin enables the simulation of different actions and decisions at a user level. Different performance indicators or metrics for each individual user (e.g., churn, revenue, or upsell) may be optimized by proposing the right action for each customer. For instance, results from digital twins may be aggregated for a pool of customers to build an optimal surface (e.g., global response function) for specific performance indicators. Thus, the digital twins may be used to provide the global response function for various performance indicators on which a business decision will be based. The surface may account for correlations between different indicators. When a point on the surface is selected (e.g., a particular performance indicator such a specific target revenue), the group level function (global response function) enables the system to identify and provide the corresponding actions to be applied for individual users.

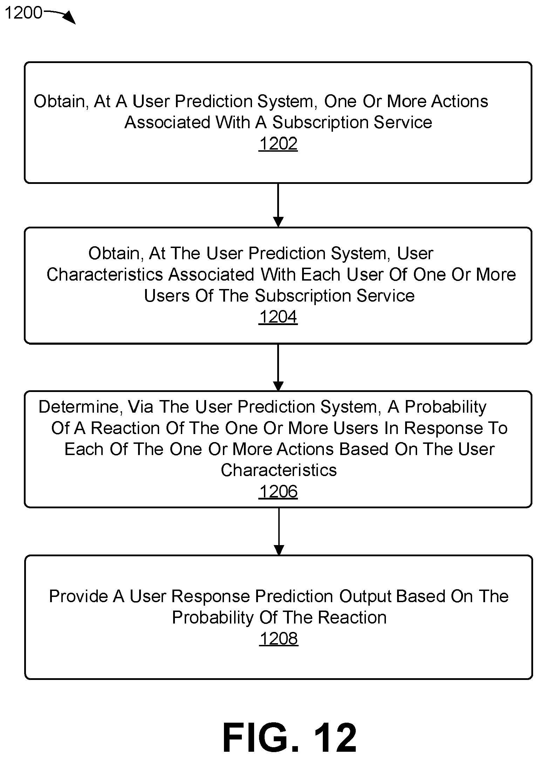

FIG. 12 illustrates example operations 1200 for user response prediction, in accordance with certain aspects of the present disclosure. The operations 1200 may be performed, for example, by a user prediction system, such as the user prediction system 100.

At block 1202, the user prediction system obtains one or more actions associated with a subscription service. The one or more actions may include a price increase associated with the subscription service. In some cases, different price increases may be applied for different users, or a fix price increase may be applied across users.

At block 1204, the user prediction system obtains user characteristics associated with each user of one or more users of the subscription service. In some aspects, the user prediction system may obtain contextual information, such as competition, economical impact (e.g., inflation), unemployment rate, or weather. At block 1206, the user prediction system determines a probability of a reaction of the one or more users in response to each of the one or more actions based on the user characteristics. The user prediction system may determine the probability of the reaction further based on the contextual information. In some aspects, the contextual information may be obtained from an external database. For example, from the external database, it may be identified that the user is from a particular city where internet speeds may be limited. This information may be taken into account when determining the probability of the reaction. At block 1208, the user prediction system provides a user response prediction output based on the probability of the reaction.

In some aspects, the one or more actions include multiple actions and the one or more users include multiple users. Determining the probability may include determining probabilities of reactions of each of the multiple users in response to each of the multiple actions. The user prediction system may select a subset of the multiple actions (e.g., associated with points 606, 608 described with respect to FIG. 6) based on the probabilities of the reactions, the user response prediction output being provided based on the subset of the multiple actions. In some cases, the user prediction system may provide information regarding impact on a performance indicators, such as churn or revenue (e.g., as described with respect to FIG. 11A). For example, the user prediction system may determine an impact of performing the subset of action on performance indicators by aggregating the probabilities of the reactions. The user response prediction output may include an indication of the impact. In some cases, the subset of the multiple actions includes actions that provide a highest value for a first one of the performance indicators (e.g., highest number of users saved) given a value of a second one of the performance indicators (e.g., given a specific revenue). In some cases, the user prediction system receives an indication of a tradeoff between the performance indicators (e.g., via graphical user interface 1100 as described with respect to FIG. 11A). The user prediction system determines an action (e.g., actions 1106 shown in FIG. 11A) of the subset of actions to be applied for each of the multiple users based on the tradeoff. The user response prediction output may include the action to be applies for each of the multiple users. The impact on the performance indicators may include an impact on at least one of revenue, churn, and profitability associated with the subscription service. Profitability may include a revenue for the user minus cost associated with the user (e.g., cost of infrastructure, or data). In some cases, the impact on the performance indicators may include impact on call centers or payment delays. The user prediction system may also perform future prediction of impact (e.g., as shown in graphs 1104). For example, the user prediction system may determine the impact on the performance indicators includes determining the impact to the performance indicators at least two future moments in time.

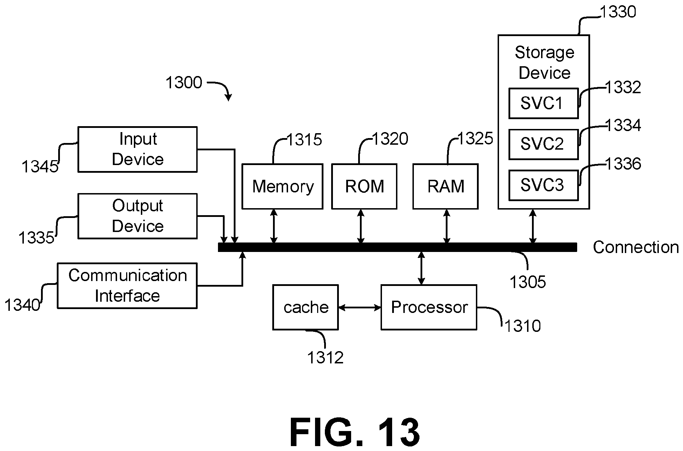

FIG. 13 illustrates an architecture of a computing system 1300 wherein the components of the system 1300 are in electrical communication with each other using a connection 1305, such as a bus. Exemplary system 1300 includes a processing unit (CPU or processor) 1310 and a system connection 1305 that couples various system components including the system memory 1315, such as read only memory (ROM) 1320 and random access memory (RAM) 1325, to the processor 1310. The system 1300 can include a cache of highspeed memory connected directly with, in close proximity to, or integrated as part of the processor 1310. The system 1300 can copy data from the memory 1315 and/or the storage device 1330 to the cache 1312 for quick access by the processor 1310. In this way, the cache can provide a performance boost that avoids processor 1310 delays while waiting for data. These and other modules can control or be configured to control the processor 1310 to perform various actions. Other system memory 1315 may be available for use as well. The memory 1315 can include multiple different types of memory with different performance characteristics. The processor 1310 can include any general purpose processor and a hardware or software service, such as service 1 1332, service 2 1334, and service 3 1336 stored in storage device 1330, configured to control the processor 1310 as well as a special-purpose processor where software instructions are incorporated into the actual processor design. The processor 1310 may be a completely self-contained computing system, containing multiple cores or processors, a bus, memory controller, cache, etc. A multi-core processor may be symmetric or asymmetric.

To enable client interaction with the computing system 1300, an input device 1345 can represent any number of input mechanisms, such as a microphone for speech, a touch-sensitive screen for gesture or graphical input, keyboard, mouse, motion input, speech and so forth. An output device 1335 can also be one or more of a number of output mechanisms known to those of skill in the art. In some instances, multimodal systems can enable a client to provide multiple types of input to communicate with the computing system 1300. The communications interface 1340 can generally govern and manage the client input and system output. There is no restriction on operating on any particular hardware arrangement and therefore the basic features here may easily be substituted for improved hardware or firmware arrangements as they are developed.

Storage device 1330 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 1325, read only memory (ROM) 1320, and hybrids thereof.

The storage device 1330 can include services 1332, 1334, 1336 for controlling the processor 1310. Other hardware or software modules are contemplated. The storage device 1330 can be connected to the system connection 1305. In one aspect, a hardware module that performs a particular function can include the software component stored in a computer-readable medium in connection with the necessary hardware components, such as the processor 1310, connection 1305, output device 1335, and so forth, to carry out the function.

As used herein, the term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks including functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific embodiments thereof, but those skilled in the art will recognize that the application is not limited thereto. Thus, while illustrative embodiments of the application have been described in detail herein, it is to be understood that the concepts in this disclosure may be otherwise variously embodied and employed, and that the appended claims are intended to be construed to include such variations, except as limited by the prior art. Various features and aspects of the above-described application may be used individually or jointly. Further, embodiments can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

One of ordinary skill will appreciate that the less than ("<") and greater than (">") symbols or terminology used herein can be replaced with less than or equal to ("≤") and greater than or equal to ("≥") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" or "one or more of" a set indicates that one member of the set or multiple members of the set satisfy the claim. For example, claim language reciting "at least one of A and B" means A, B, or A and B.

The various illustrative logical blocks, modules, circuits, and algorithm steps described in connection with the embodiments disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software modules or hardware modules.

Illustrative Aspects of the present disclosure are as follows:
Clause 1. A method for user response prediction, comprising: obtaining, via a user prediction system, one or more actions associated with a subscription service; obtaining, via the user prediction system, user characteristics associated with each user of one or more users of the subscription service; determining, via the user prediction system, a probability of a reaction of the one or more users in response to each of the one or more actions based on at least the user characteristics; and providing a user response prediction output based on the probability of the reaction.
Clause 2. The method of clause 1, wherein: the one or more actions comprise multiple actions and the one or more users comprise multiple users; and the method further comprises: aggregating the probabilities of the reactions to the multiple actions to yield a user response function; and selecting a subset of the multiple actions to meet a performance indicator based on the user response function, the user response prediction output including indications of the subset of the multiple actions.
Clause 3. The method of any one of clauses 1-2, wherein the probability of the reaction is determined further based on contextual information associated with the user.
Clause 4. The method of any one of clauses 1-3, wherein: the one or more actions comprise multiple actions and the one or more users comprise multiple users; determining the probability comprises determining probabilities of reactions of each of the multiple users in response to each of the multiple actions; and the method further comprises selecting a subset of the multiple actions based on the probabilities of the reactions, the user response prediction output being provided based on the subset of the multiple actions.
Clause 5. The method of clause 4, further comprising determining an impact of performing the subset of action on performance indicators by aggregating the probabilities of the reactions, wherein the user response prediction output includes an indication of the impact.
Clause 6. The method of clause 5, wherein the subset of the multiple actions comprises actions that provide a highest value for a first one of the performance indicators given a value of a second one of the performance indicators.
Clause 7. The method of any one of clauses 5-6, further comprising: receiving an indication of a tradeoff between the performance indicators; and determining an action of the subset of actions to be applied for each of the multiple users based on the tradeoff, wherein the user response prediction output comprises the action to be applies for each of the multiple users.
Clause 8. The method of any one of clauses 5-7, wherein the impact on the performance indicators comprises an impact on at least one of revenue, churn, or profitability associated with the subscription service.
Clause 9. The method of any one of clauses 5-8, wherein determining the impact on the performance indicators includes determining the impact to the performance indicators at least two future moments in time.
Clause 10. The method of any one of clauses 1-9, wherein the one or more actions comprises a price increase associated with the subscription service.
Clause 11. The method of any one of clauses 1-10, wherein the user prediction system comprises at least one machine learning model trained to determine the probability of the reaction.
Clause 12. An apparatus for user response prediction, comprising: a memory; and one or more processors coupled to the memory, the one or more processors being configured to: obtain, via a user prediction system, one or more actions associated with a subscription service; obtain, via the user prediction system, user characteristics associated with each user of one or more users of the subscription service; determine, via the user prediction system, a probability of a reaction of the one or more users in response to each of the one or more actions based on the user characteristics; and provide a user response prediction output based on the probability of the reaction.
Clause 13. The apparatus of clause 12, wherein the one or more processors are configured to obtain contextual information associated with the user from an external database, the probability of the reaction is determined further based on the contextual information associated with the user.
Clause 14. The apparatus of any one of clauses 12-13, wherein: the one or more actions comprise multiple actions and the one or more users comprise multiple users; to determine the probability, the one or more processors are configured to determine probabilities of reactions of each of the multiple users in response to each of the multiple actions; and the one or more processors are further configured to select a subset of the multiple actions based on the probabilities of the reactions, the user response prediction output being provided based on the subset of the multiple actions.
Clause 15. The apparatus of clause 14, wherein the one or more processors are further configured to determine an impact of performing the subset of action on performance indicators by aggregating the probabilities of the reactions, wherein the user response prediction output includes an indication of the impact.
Clause 16. The apparatus of clause 15, wherein the one or more processors are further configured to: receive an indication of a tradeoff between the performance indicators; and determine an action of the subset of actions to be applied for each of the multiple users based on the tradeoff, wherein the user response prediction output comprises the action to be applies for each of the multiple users.
Clause 17. A non-transitory computer-readable medium having instructions stored thereon, which when executed by one or more processors, cause the one or more processors to: obtain, via a user prediction system, one or more actions associated with a subscription service; obtain, via the user prediction system, user characteristics associated with each user of one or more users of the subscription service; determine, via the user prediction system, a probability of a reaction of the one or more users in response to each of the one or more actions based on the user characteristics; and provide a user response prediction output based on the probability of the reaction.
Clause 18. The non-transitory computer-readable medium of Clause 17, further comprising instructions, which when executed by one or more processors, cause the one or more processors to perform operations according to any of Clauses 12-16.

## Claims

1. A method for user response prediction, comprising:
obtaining, via a user prediction system, one or more actions associated with a subscription service;
obtaining, via the user prediction system, user characteristics associated with each user of one or more users of the subscription service;
determining, via the user prediction system, a probability of a reaction of the one or more users in response to each of the one or more actions based on at least the user characteristics; and
providing a user response prediction output based on the probability of the reaction.

2. The method of claim 1, wherein:
the one or more actions comprise multiple actions and the one or more users comprise multiple users; and
the method further comprises:
aggregating the probabilities of the reactions to the multiple actions to yield a user response function; and
selecting a subset of the multiple actions to meet a performance indicator based on the user response function, the user response prediction output including indications of the subset of the multiple actions.

3. The method of claim 1, wherein the probability of the reaction is determined further based on contextual information associated with the user.

4. The method of claim 1, wherein:
the one or more actions comprise multiple actions and the one or more users comprise multiple users;
determining the probability comprises determining probabilities of reactions of each of the multiple users in response to each of the multiple actions; and
the method further comprises selecting a subset of the multiple actions based on the probabilities of the reactions, the user response prediction output being provided based on the subset of the multiple actions.

5. The method of claim 4, further comprising determining an impact of performing the subset of action on performance indicators by aggregating the probabilities of the reactions, wherein the user response prediction output includes an indication of the impact.

6. The method of claim 5, wherein the subset of the multiple actions comprises actions that provide a highest value for a first one of the performance indicators given a value of a second one of the performance indicators.

7. The method of claim 5, further comprising:
receiving an indication of a tradeoff between the performance indicators; and
determining an action of the subset of actions to be applied for each of the multiple users based on the tradeoff, wherein the user response prediction output comprises the action to be applies for each of the multiple users.

8. The method of claim 5, wherein the impact on the performance indicators comprises an impact on at least one of revenue, churn, or profitability associated with the subscription service.

9. The method of claim 5, wherein determining the impact on the performance indicators includes determining the impact to the performance indicators at least two future moments in time.

10. The method of claim 1, wherein the one or more actions comprises a price increase associated with the subscription service.

11. The method of claim 1, wherein the user prediction system comprises at least one machine learning model trained to determine the probability of the reaction.

12. An apparatus for user response prediction, comprising:
a memory; and
one or more processors coupled to the memory, the one or more processors being configured to:
obtain, via a user prediction system, one or more actions associated with a subscription service;
obtain, via the user prediction system, user characteristics associated with each user of one or more users of the subscription service;
determine, via the user prediction system, a probability of a reaction of the one or more users in response to each of the one or more actions based on the user characteristics; and
provide a user response prediction output based on the probability of the reaction.

13. The apparatus of claim 12, wherein the one or more processors are configured to obtain contextual information associated with the user from an external database, the probability of the reaction is determined further based on the contextual information associated with the user.

14. The apparatus of claim 12, wherein:
the one or more actions comprise multiple actions and the one or more users comprise multiple users;
to determine the probability, the one or more processors are configured to determine probabilities of reactions of each of the multiple users in response to each of the multiple actions; and
the one or more processors are further configured to select a subset of the multiple actions based on the probabilities of the reactions, the user response prediction output being provided based on the subset of the multiple actions.

15. The apparatus of claim 14, wherein the one or more processors are further configured to at least one of:
determine an impact of performing the subset of action on performance indicators by aggregating the probabilities of the reactions, wherein the user response prediction output includes an indication of the impact; or
receive an indication of a tradeoff between the performance indicators and determine an action of the subset of actions to be applied for each of the multiple users based on the tradeoff, wherein the user response prediction output comprises the action to be applies for each of the multiple users.
